(19) Europäisches Patentamt / European Patent Office / Office européen des brevets

(11) **EP 3 486 439 B1**

(12) **EUROPEAN PATENT SPECIFICATION**

(45) Date of publication and mention
of the grant of the patent:
**04.01.2023  Bulletin 2023/01**

(21) Application number: **17425115.7**

(22) Date of filing: **21.11.2017**

(51) International Patent Classification (IPC):
**F01K 13/02** *(2006.01)*      **F01K 23/10** *(2006.01)*
**F01K 7/16** *(2006.01)*

(52) Cooperative Patent Classification (CPC):
**F01K 13/02; F01K 7/165; F01K 23/101;**
Y02E 20/16

(54) **M+N COMBINED CYCLE POWER PLANT AND METHOD OF CONTROLLING A M+N COMBINED CYCLE POWER PLANT**

M+N-KOMBIKRAFTWERK UND VERFAHREN ZUM BETRIEB EINES M+N-KOMBIKRAFTWERKS

CENTRALE ÉLECTRIQUE À CYCLE COMBINÉ M+N ET PROCÉDÉ POUR COMMANDER UNE TELLE CENTRALE ÉLECTRIQUE À CYCLE COMBINÉ M+N

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2019  Bulletin 2019/21**

(73) Proprietor: **Ansaldo Energia S.p.A.
16152 Genova (IT)**

(72) Inventors:
  • **Repetto, Enrico
    16149 Gevona (IT)**
  • **Ferrua, Stefano
    15022 Bergamasco (IT)**
  • **Lukianov, Eugenio
    16135 Genova (IT)**

(74) Representative: **Bergadano, Mirko et al
Studio Torta S.p.A.
Via Viotti, 9
10121 Torino (IT)**

(56) References cited:
**EP-A1- 2 765 288        EP-A2- 2 456 037
WO-A2-2013/065031     US-A- 4 222 229
US-A1- 2013 054 038**

**Description**

The present invention relates to a m+n combined cycle power plant and method of controlling a m+n combined cycle power plant.

As is known, control of gas turbines and steam turbines in combined cycle power plants is a complex and critical issue, because there is a need to cope with several and sometimes conflicting requirements, both under normal and in transient operating conditions. Particularly complex is also the case with combined cycle power plants that include a plurality of gas turbines and one or more steam turbines (these power plants being generally referred to as in "m+n" configuration, where m and n define respectively the number of gas turbines and steam turbines present). In these cases, steam produced by boilers using the residual heat of the exhaust gas of the m gas turbines is supplied to the n steam turbines.

One of the most critical aspects in "m+n" power plants concerns the gas turbines coordination, which require to be controlled independently, to some extent. For example, gas turbines may be of different size and may be subjected to different load gradient limitations, or may be in different operating conditions for accidental reasons, which may depend on market demand, sudden transients, malfunctions, grid code requirements on contribution to grid control or the like. As a result, gas turbines may not be in condition to respond in the same manner and load targets should be coordinately selected to achieve desired level of overall plant performance, instead of individually for each gas turbine. Plant response may not be satisfactory.

EP 2 765 288 A1 discloses a combined cycle power plant comprising a plurality of gas turbines, at least one steam turbine and control system, configured to operate the gas turbines and the at least one steam turbines in accordance with a programmed or received plant load target. The control system comprises processing lines associated with respective gas turbines and is configured to operate respective gas turbine selectively in an automatic control mode, whereby current individual load set-points of the gas turbines are determined by respective processing lines, or in a manual control mode, whereby operators are allowed to manually select the current individual load set-points. The processing lines are configured to determine the current individual load set-points of the respective gas turbines in the automatic control mode based on the plant load target and on current operating conditions of the other gas turbines in the automatic control mode. The control system is further configured to determine an overall gas turbine load variation based on the plant load target and on a current steam turbine load of the at least one steam turbine and to determine respective weights for the gas turbines in the automatic control mode, the weights defining fractions of the overall gas turbine load variation assigned to respective gas turbines.

Other examples of known combined cycle power plant are disclosed in US 2013/054038 A1, in EP 2 456 037 A2, in WO 2013/065031 A2 and in US 4 222 229 A.

It is thus the object of the present invention to provide m+n combined cycle power plant and method of controlling a m+n combined cycle power plant, which allow to overcome or at least attenuate the described limitations.

According to the present invention, a m+n combined cycle power plant and method of controlling a m+n combined cycle power plant are provided as claimed in claims 1 and 7, respectively.

The present invention will now be described with reference to the accompanying drawings, which show a non-limitative embodiment thereof, in which:

- figure 1 is a simplified block diagram of a combined cycle plant, incorporating a control device according to an embodiment of the present invention;
- figure 2 is a more detailed block diagram of a first portion of the control device of figure 1;
- figure 3 is a more detailed block diagram of second portions of the control device of figure 1;
- figure 4 is a flow chart relating to operation of the combined cycle plant of figure 1.

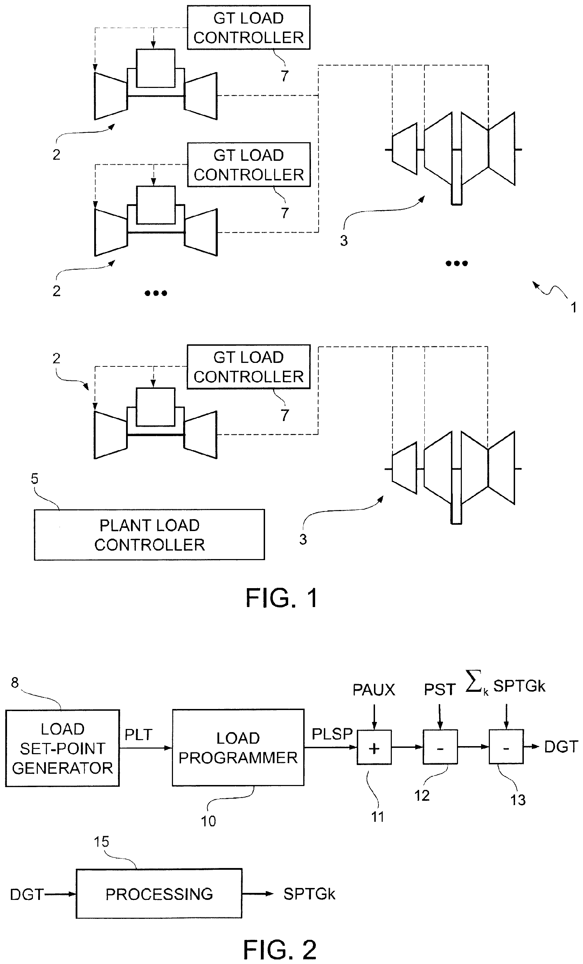

As shown in figure 1, a combined cycle power plant includes a plurality of gas turbines 2 and a plurality of steam turbines 3, the number of gas turbines and of steam turbines being designated by m and n, respectively. Also provided in the power plant 1 are boilers, condensers, alternators and auxiliary equipment, which are not illustrated herein for the sake of simplicity. In particular, each gas turbine 2 is coupled to a respective boiler which produces steam for the steam turbines 3.

The power plant 1 further comprises a plant load controller 5 and gas turbines load controllers 7 for respective gas turbines 3. The plant load controller 5 defines an overall plant load target PLT, a plant load set-point PLSP, an overall gas turbine load variation DGT (i.e. a load increment to be supplied by the gas turbines 2 as a whole) and individual load set-points SPGT1, ..., SPGTm for the gas turbines 2.

The plant load controller 5 is configured to operate the gas turbines 2 either in a manual control mode or in an automatic control mode, independently from each other, i.e. at any time each gas turbine 2 may be operated either in the manual control mode or in the automatic control mode independently of the control mode applied to the other gas turbines 2. In the manual control mode, an operator is allowed to manually select the desired individual load set-points SPGT1, ..., SPGTm, while, in the automatic control mode, individual load set-points SPGT1, ..., SPGTm for the gas turbines 2 are automatically determined by the plant load controller 5.

The gas turbines load controllers 7 are configured to control the respective gas turbines 2 in accordance with the individual load set-points SPGT1, ..., SPGTm received from the plant load controller 5.

Steam turbines 3 (not shown) may be operated in "sliding pressure" mode, and follow the load variations of the corresponding gas turbines 2.

As illustrated in figure 2, in one embodiment the plant load controller 5 may include an overall load set-point generator 8, an overall load programmer 10, an adder module 11, subtractor modules 12, 13 and a processing module 15.

The overall load set-point generator 8 is configured to select the plant load target PLT, which may be determined automatically, based on programmed load schedules, e.g. defined by an external regulating authority, or by allowing manual intervention of an operator.

The overall load programmer 10 is configured to iteratively define the plant load set-points PLSP to reach the overall plant load target PLT from the current load condition, based on current maximum available plant load gradients (maximum available load gradients of individual gas turbines 2 depend on current operating conditions and are iteratively updated; maximum available plant load gradients are determined in the plant load controller 5 from a combination, e.g. sum, of the maximum available load gradients of individual gas turbines 2 and of the actual load gradients of the steam turbines 3). Specifically, the plant load set-points PLSP may be determined to fill a difference between the plant load target PLT and the current plant load in the shortest time allowed by maximum available plant load gradients.

Adder module 11 adds auxiliary power PAUX taken by the auxiliary equipment to the current plant load set-point PLSP, while subtractor modules 12, 13 subtract current overall steam turbine load PST and current individual load set-points SPGT1, ..., SPGTm of all gas turbines 2. Updated overall gas turbines load variation DGT is thus obtained.

The processing module 15 is configured to share the overall gas turbine load variation DGT among the gas turbines 2 as discussed later on.

As already mentioned, gas turbines 2 may be operated either in manual control mode or in automatic control mode. Manual control mode is commonly used at the startup of gas turbines 2, which are individually switched to automatic control mode as soon as the minimum environmental load is reached (i.e. as soon as a gas turbine 2 reaches its minimum environmental load, that gas turbine 2 is switched to automatic control mode). Three conditions may be found during start transients of the power plant 1 as a whole or of individual gas turbines 2:

a) all gas turbines 2 are operated in manual mode: in this case, each gas turbine 2 follows a load ramp that is independent from the load ramps of the other gas turbines 2 and the plant load target PLT and the plant load set-points PLSP are put in track of the sum of the individual load set-points SPGT1, ..., SPGTm for the gas turbines 2 and the overall steam turbine load PST of the steam turbines 3, having subtracted the load contribution PAUX taken by the auxiliary equipment of the power plant 1;

b) some gas turbines 2 are operated in manual mode and some in automatic mode: the plant load target PLT is determined by the overall load set-point generator 8, the plant load set-point PLSP is obtained from the plant load target PLT through the load programmer 10 and the individual load set-points SPGT1, ..., SPGTm to the gas turbines 2 operated in automatic mode are selected to compensate the gas turbines 2 in manual mode so that the plant load meets the plant load set-points PLSP;

c) all the gas turbines 2 are operated in automatic mode: the individual load set-points SPGT1, ..., SPGTm of the gas turbines 2 are individually determined so that the plant load meets the plant load set-points PLSP.

Specifically, the processing module 15 may comprise a plurality of processing lines 17 and a weight calculator 19. The processing lines 17 are configured to determine respective current individual load set-points SPGT1, ..., SPGTm for respective gas turbines 2 from the overall gas turbine load variation DGT so that the load variation of the gas turbines 2 as a whole meets the overall gas turbine load variation DGT. The weight calculator 19 is configured to determine weights Wk for respective gas turbines 2 for the purpose of sharing the overall gas turbine load variation DGT among the gas turbines 2. Specifically, the weights Wk define the fractions of the overall gas turbine load variation DGT that are assigned to respective gas turbines 2 associated with the k-th processing line 17. The weights Wk are determined by the weight calculator 19 in order to provide an overall plant response in line with the plant load set-points PLSP, taking the current operation condition of each gas turbine 2 and of the steam turbines 3 into consideration.

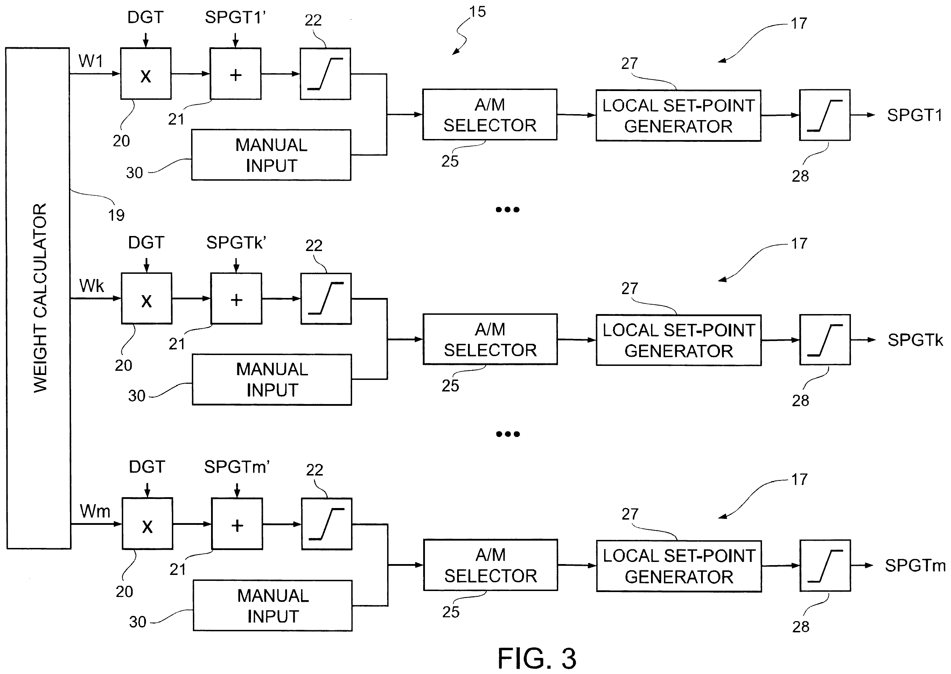

Figure 3 shows an array of m processing lines 17, one for each gas turbine 2 and hereinafter identified by a generic k-th (k = 1, 2, ..., m) processing line 17, it being understood that the following discussion equally applies also to the other processing lines 17 (i.e. the processing lines 17 of the other gas turbines 2). Each processing line 17, in particular the k-th processing line 17, is configured to apply a respective weight Wk as provided by the weight calculator 19 to the overall gas turbine load variation DGT and to add the result to the previously determined individual load set-points SPGTk' of the k-th gas turbine 2 associated with the k-th processing line 17. The result is subjected to gradient limitation in accordance with maximum individual automatic increase gradient MAXGAIk and individual automatic decrease gradient MAXGADk of the respective gas turbine 2. The individual maximum automatic increase gradient MAXGAIk and individual maximum automatic decrease gradient MAXGADk depend on the type and current operating conditions of the gas turbine 2 and are iteratively determined on the basis of the current status thereof. When the processing line 17 switches to manual control mode, the gas turbine manual load set point is set by an operator and is subjected to gradient limitations in accordance with individual maximum manual increase gradient and individual maximum manual decrease gradient of the respective gas turbine 2.

In one embodiment, the processing lines 17 may have the structure illustrated in figure 3. Each processing line 17 may comprise a multiplier module 20, an adder module 21 and an automatic-mode gradient limiter 22, all cascaded to one another. The processing line 17 may further comprise an automatic/manual (a/m) selector 25, a manual-mode set point generator 27 and a manual-mode gradient limiter 28. The multiplier module 20 applies the weight Wk of the respective as determined by the processing module 15 to the overall gas turbine load variation DGT and the result is added to the current individual load set-points SPGT k in the adder module 21 and then fed to the automatic-mode gradient limiter 22. The a/m selector 25 is configured to switch between automatic control mode, in which the output of the automatic-mode gradient limiter 22 is passed to the manual-mode set point generator 27, and a manual control mode, in which a manual set point received through an input device 30 is passed to the manual-mode set-point generator 27.

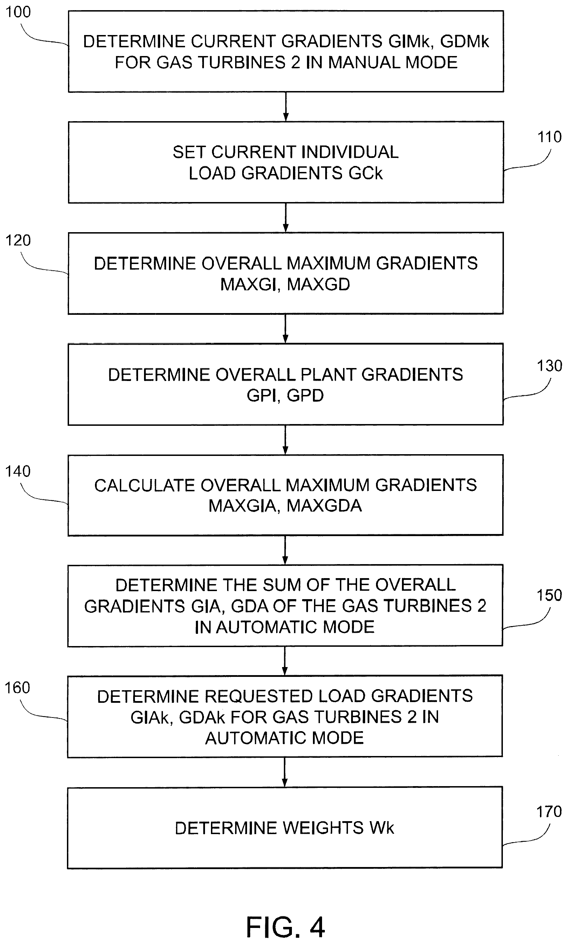

The processing module 15 is configured to determine the weights Wk (k = 1, 2, ..., m) as ratios Nk/Dk of a respective first coefficient Nk and a respective second coefficient Dk in accordance with the procedure illustrated in figure 4.

In a first step (block 100), the processing module 15 determines current gradients for gas turbines 2 operating in manual mode. Gradients are herein treated as positive quantities to which positive or negative sign is applied depending on whether the corresponding gas turbines 2 undergo increase or decrease load ramps. It is understood that sign may be incorporated in gradients in other embodiments. Specifically, in the first step the processing module 15 determines a current manual increase load gradient GIMk and a current manual decrease load gradient GDMk in case the k-th gas turbine 2 undergoes increase load ramp or decrease load ramp, respectively, as follows:

GIMk = min (MAXGIk, GMk) if the load ramp of the k-th gas turbine 2 is increasing, 0 otherwise;
GDMk = min (MAXGDk, GMk) if the load ramp of the k-th gas turbine 2 is decreasing, 0 otherwise,

where MAXGIk and MAXGDk are the individual maximum increase, respectively decrease, load gradient and GMk is the positive or negative load gradient manually set by the operator in manual mode.

Then (block 110), the processing module 15 sets the current gas turbine load gradient GCk as follows:

a) if the k-th gas turbine 2 is operated in automatic mode:

GCk = GIAk if the load set-point is increasing;
GCk = GDAk if the load set-point is decreasing;
GCk = 0 if the load set-point is steady,

where GIAk and GDAk are the requested load gradient for the k-th gas turbine 2 when load is increasing and decreasing, respectively (GIAk and GDAk are still to be determined at this stage);
b) if the k-th gas turbine 2 is operated in manual mode:

$$GCK = GIMk - GDMk$$

The processing module 15 then determines the overall maximum increase gradient MAXGI and overall maximum decrease gradient MAXGD for the whole power plant 1 (block 120). To this end, the processing module 15 uses auxiliary quantities MAXGIk', MAXGDk' defined as a current maximum increase, respectively decrease, load gradient as follows:

$$MAXGIk' = MAXGIk$$

$$MAXGDk' = MAXGDk$$

if the a/m selector 25 is in automatic mode and

$$MAXGIk' = GCk$$

$$MAXGDk' = -GCk$$

if the a/m selector 25 is in manual mode.

The overall maximum increase gradient MAXGI and overall maximum decrease gradient MAXGD are then determined by the processing module as follows

$$MAXGI = max(0, \sum_k MAXGIk' + GCST)$$

$$MAXGD = max(0, \sum_k MAXGDk' + GCST),$$

where GCST is the current load gradient of all the steam turbines 3 of the power plant 1. In practice, the overall maximum increase gradient MAXGI and overall maximum decrease gradient MAXGD reflect the fact that the maximum contribution of the gas turbines 2 in manual mode is limited to the positive or negative load gradient GMk manually set by the operator.

In a subsequent step (block 130), the processing module 15 determines an overall plant increase gradient GPI and an overall plant decrease gradient GPD:

GPI = min(MAXGI, CGP) if the load ramp of the k-th gas turbine 2 is increasing, 0 otherwise;
GPD = min(MAXGD, CGP) if the load ramp of the k-th gas turbine 2 is decreasing, 0 otherwise;

where CGP is the currently programmed gradient of the plant load set-points PLSP set manually by an operator or received from outside the power plant 1.

Then (block 140), the processing unit 15 calculates an overall maximum increase gradient MAXGIA and an overall maximum decrease gradient MAXGDA of the gas turbines 2 in the automatic control mode as follows:

$$MAXGIA = max(0, \sum_k MAXGIk'')$$

$$MAXGDA = max(0, \sum_k MAXGDk''),$$

where the auxiliary quantities MAXGIk", MAXGDk" are defined as:

$$MAXGIk'' = MAXGIk$$

$$MAXGDk'' = MAXGDk$$

if the a/m selector 25 is in automatic mode and

$$MAXGIk'' = 0$$

$$MAXGDk'' = 0$$

if the a/m selector 25 is in manual mode.

Therefore, the overall maximum increase gradient MAXGIA and the overall maximum decrease gradient MAXGDA of the gas turbines 2 consider only maximum contributions of gas turbines 2 in automatic control mode.

Afterwards (block 150), the processing module 15 determines the sum of the overall increase gradient GIA and overall decrease gradient GDA of the gas turbines 2 in the automatic control mode. Having defined the auxiliary quantities:

GCk' = 0 if the a/m selector 25 is in automatic mode and
GCk' = GCk if the a/m selector 25 is in manual mode, the overall increase gradient GIA and overall decrease gradient GDA of the gas turbines 2 in the automatic control mode is calculated as follows:

$$GIA = \max(0, GPI - \sum_k GCIk' - GCST)$$

$$GDA = \max(0, GPD + \sum_k GCDk' + GCST).$$

In practice, the terms $\Sigma_k GCIk'$ and $\Sigma_k GCDk'$ represent the sum of the gradients of gas turbines 2 in manual control mode only.

Then (block 160), the requested increase load gradient GIAk and requested decrease load gradient GDAk are determined for gas turbines 2 in automatic control mode as follows:

$$GIAk = \max\left(0, \min\left(MAXGIk, \frac{MAXGIk}{MAXGIA}GIA\right)\right)$$

$$GDAk = \max\left(0, \min\left(MAXGDk, \frac{MAXGDk}{MAXGDA}GDA\right)\right).$$

In practice, the requested load gradients GIAk, GDAk are defined as the fractions of the overall gas turbine load gradients assigned to the gas turbines 2 in the automatic control mode that are actually contributing either to increase or to decrease of the load, in any case in the same direction. The requested load gradients GIAk, GDAk are determined based on the current maximum capability of each gas turbine 2 to contribute to increase or to decrease the overall gas turbine load compared to the current maximum capability of all the gas turbines 2 as a whole to produce load variation in the same direction, either increasing or decreasing. Moreover, the requested load gradients GIAk, GDAk are limited to the respective individual maximum load gradients MAXGIk, MAXGDk of the gas turbines 2 in the automatic control mode.

Finally (block 170), the processing module 15 determines the first coefficients Nk and the second coefficients Dk of the weights Wk as follows:

a) if the overall load set-point of the gas turbines 2 is increasing or steady (DGT $\geq$ 0)

$$Nk = GIAk$$

$$Dk = GIA$$

b) if the overall load set-point of the gas turbines 2 is decreasing (DGT < 0)

$$Nk = GDAK$$

$$Dk = GDA$$

The weights Wk are determined as the ratio of the respective first coefficients Nk and second coefficients Dk.

The procedure implemented by the processing lines 17, in particular by the processing modules 15, allows to share load requirements among available gas turbines 2 in automatic mode such that overall load set-point and gradient conditions for the response of the power plant 1 are met.

It is finally apparent that changes and variations may be made to the described method and power plant without departing from the scope of the present invention as defined in the appended claims.

**Claims**

1.  A combined cycle power plant comprising:

    a plurality of gas turbines (2);
    at least one steam turbine (3);
    a control system (5, 7), configured to operate the gas turbines (2) and the at least one steam turbines (3) in accordance with a programmed or received plant load target (PLT) ;
    wherein the control system (5, 7) comprises processing lines (17) associated with respective gas turbines (2) and is configured to operate respective gas turbine (2) selectively in an automatic control mode, whereby current individual load set-points (SPGT1, ..., SPGTm) of the gas turbines (2) are determined by respective processing lines (17), or in a manual control mode, whereby operators are allowed to manually select the current individual load set-points (SPGT1, ..., SPGTm);
    wherein the processing lines (17) are configured to determine the current individual load set-points (SPGT1, ..., SPGTm) of the respective gas turbines (2) in the automatic control mode based on the plant load target (PLT) and on current operating conditions of the other gas turbines (2) in the automatic control mode;
    wherein the control system (5, 7) is configured to determine an overall gas turbine load variation (DGT) based on the plant load target (PLT) and on a current steam turbine load (PST) of the at least one steam turbine (3) and wherein the control system (5, 7) is further configured to determine respective weights (Wk) for the gas turbines (2) in the automatic control mode, the weights (Wk) defining fractions of the overall gas turbine load variation (DGT) assigned to respective gas turbines (2);
    **characterized in that** the control system (5, 7) is further configured to determine the weights (Wk) by:

    determining manual-mode gradients (GIMk, GDMk) of gas turbines (2) in the manual operating mode;
    determining overall plant maximum gradients (MAXGI, MAXGD) based on individual maximum automatic-mode gradients (MAXGIk, MAXGDk) of the gas turbines (2) in automatic operating mode and on manual load gradients (GMk) manually set in manual mode;
    determining overall plant gradients (GPI, GPD) based on overall plant maximum gradients (MAXGI, MAXGD) and a currently programmed gradient (CGP) for the gas turbines (2) as a whole, the currently programmed gradient (CGP) being programmed in the control system (5, 7) or received by the control system (5, 7) from outside or set manually by an operator;
    determining overall automatic-mode maximum gradients (MAXGIA, MAXGDA) of gas turbines (2) in automatic control mode;
    determining overall automatic-mode gradients (GIA, GDA) of gas turbines (2) in automatic control mode based on the overall plant gradients (GPI, GPD), the manual-mode gradients (GIMk, GDMk) of gas turbines (2) in the manual operating mode and a current steam turbine gradient (GCST) of the at least one steam turbine (3);
    determining individual automatic-mode gradients (GIAk, GDAk) of gas turbines (2) in automatic control mode based on a ratio of the individual maximum automatic-mode gradients (MAXGIk, MAXGDk) to overall automatic-mode maximum gradients (MAXGIA, MAXGDA) of gas turbines (2) in automatic control mode and on overall automatic-mode gradients (GIA, GDA); and
    determining the weights (Wk) from the individual automatic-mode gradients (GIAk, GDAk) and overall automatic-mode gradients (GIA, GDA).

2.  The power plant according to claim 1, wherein the operating conditions of the gas turbines (2) include the respective current individual load set-points (SPGT1, ..., SPGTm) and respective current individual load gradients (GCk) .

3.  The power plant according to claim 1 or 2, wherein the individual automatic-mode gradients (GIAk, GDAk) of gas turbines (2) in automatic control mode include an increase individual automatic-mode gradients (GIAk) and a decrease individual automatic-mode gradients (GDAk).

4.  The power plant according to claim 3, wherein the control system (5, 7) is configured to determine the increase individual automatic-mode gradients (GIAk) and the decrease individual automatic-mode gradients (GDAk) as

$$\mathrm{GIAk} \;=\; \mathrm{max}\!\left(0,\; \mathrm{min}\!\left(\mathrm{MAXGIk},\; \frac{\mathrm{MAXGIk}}{\mathrm{MAXGIA}}\,\mathrm{GIA}\right)\right)$$

$$GDAk = \max\left(0,\ \min\left(MAXGDk,\ \frac{MAXGDk}{MAXGDA}\ GDA\right)\right)$$

where MAXGIk and MAXGDk are the individual maximum increase, respectively decrease, load gradient, MAXGIA and MAXGDA are an overall maximum increase, respectively decrease, gradient and GIA and GDA are the overall increase, respectively decrease, automatic-mode gradients.

5. The power plant according to any one of the preceding claims, wherein the control system (5, 7) is configured to determine an overall plant load target (PLT) and an overall gas turbine load variation (DGT) to be supplied by the gas turbines (2) as a whole and the processing lines (17) are configured to automatically determine the current individual load set-points (SPGT1, ..., SPGTm) by:

applying respective weights (Wk) to the overall gas turbine load variation (DGT);
adding the overall gas turbine load variation (DGT) with the respective weights (Wk) to a respective current individual load set-point (SPGTk);
subsequently applying gradient limitation

6. The power plant according to claim 5, wherein the processing lines (17) include respective automatic/manual selectors (25) configured to switch between the automatic control mode, in which current individual load set-points (SPGT1, ..., SPGTm) are automatically determined by the processing lines (17), and a manual control mode, in which current individual load set-points (SPGT1, ..., SPGTm) are manually set by an operator.

7. A method of controlling a combined cycle power plant comprising a plurality of gas turbines (2) and at least a steam turbine (2), the method comprising:

operating the gas turbines (2) and the at least one steam turbines (3) in accordance with a programmed or received plant load target (PLT);
operating the gas turbine (2) selectively in an automatic control mode, whereby current individual load set-points (SPGT1, ..., SPGTm) of the gas turbines (2) are determined by the respective processing lines (17), or in a manual control mode, whereby operators are allowed to manually set the current individual load set-points (SPGT1, ..., SPGTm);
determining the current individual load set-points (SPGT1, ..., SPGTm) of the respective gas turbines (2) in the automatic control mode based on the plant load target (PLT) and of current operating conditions of the other gas turbines (2) in the automatic control mode;
wherein:

determining an overall gas turbine load variation (DGT) based on the plant load target (PLT) and on a current steam turbine load (PST) of the at least one steam turbine (3); and
determining respective weights (Wk) for the gas turbines (2) in the automatic control mode, the weights (Wk) defining fractions of the overall gas turbine load variation (DGT) assigned to respective gas turbines (2);
**characterized in that** determining the weights (Wk) comprises:

determining manual-mode gradients (GIMk, GDMk) of gas turbines (2) in the manual operating mode;
determining overall plant maximum gradients (MAXGI, MAXGD) based on individual maximum automatic-mode gradients (MAXGIk, MAXGDk) of the gas turbines (2) in automatic operating mode and on manual load gradients (GMk) manually set in manual mode;
determining overall plant gradients (GPI, GPD) based on overall plant maximum gradients (MAXGI, MAXGD) and a currently programmed gradient (CGP) for the gas turbines (2) as a whole, the currently programmed gradient (CGP) being programmed in the control system (5, 7) or received by the control system (5, 7) from outside or set manually by an operator;
determining overall automatic-mode maximum gradients (MAXGIA, MAXGDA) of gas turbines (2) in automatic control mode;
determining overall automatic-mode gradients (GIA, GDA) of gas turbines (2) in automatic control mode based on the overall plant gradients (GPI, GPD), the manual-mode gradients (GIMk, GDMk) of gas turbines (2) in the manual operating mode and a current steam turbine gradient (GCST) of the at least one steam turbine (3);
determining individual automatic-mode gradients (GIAk, GDAk) of gas turbines (2) in automatic control mode based on a ratio of the individual maximum automatic-mode gradients (MAXGIk, MAXGDk) to overall automatic-mode maximum gradients (MAXGIA, MAXGDA) of gas turbines (2) in automatic control mode and on overall automatic-mode gradients (GIA, GDA); and

determining the weights (Wk) from the individual automatic-mode gradients (GIAk, GDAk) and overall automatic-mode gradients (GIA, GDA).

8. The method according to claim 7, wherein the operating conditions of the gas turbines (2) include the respective current individual load set-points (SPGT1, ..., SPGTm) and respective current individual load gradients (GCk) .

9. The method according to claim 7 or 8, wherein the individual automatic-mode gradients (GIAk, GDAk) of gas turbines (2) in automatic control mode include an increase individual automatic-mode gradients (GIAk) and a decrease individual automatic-mode gradients (GDAk).

10. The method according to claim 9, wherein determining individual automatic-mode gradients (GIAk, GDAk) comprises determining the increase individual automatic-mode gradients (GIAk) and the decrease individual automatic-mode gradients (GDAk) as

$$\texttt{GIAk = max(0, min}\Big(\texttt{MAXGIk, } \tfrac{\texttt{MAXGIk}}{\texttt{MAXGIA}}\texttt{GIA}\Big)$$

$$\texttt{GDAk = max(0, min}\Big(\texttt{MAXGDk, } \tfrac{\texttt{MAXGDk}}{\texttt{MAXGDA}}\texttt{GDA}\Big)$$

where MAXGIk and MAXGDk are the individual maximum increase, respectively decrease, load gradient, MAXGIA and MAXGDA are an overall maximum increase, respectively decrease, gradient and GIA and GDA are the overall increase, respectively decrease, automatic-mode gradients.

11. The method according to any one of claims 7 to 10, comprising determining an overall plant load target (PLT) and an overall gas turbine load variation (DGT) to be supplied by the gas turbines (2) as a whole, wherein automatically determining the current individual load set-points (SPGT1, ..., SPGTm) comprises:

applying respective weights (Wk) to the overall gas turbine load variation (DGT);
adding the overall gas turbine load variation (DGT) with the respective weights (Wk) to a respective current individual load set-points (SPGTk);
subsequently applying gradient limitation.


**Patentansprüche**

1. Kombikraftwerk umfassend:

mehrere Gasturbinen (2);
wenigstens eine Dampfturbine (3);
ein Steuersystem (5, 7), das dazu konfiguriert ist, die Gasturbinen (2) und die wenigstens eine Dampfturbine (3) entsprechend einem programmierten oder empfangenen Anlagenlastziel (PLT) zu betreiben;
wobei das Steuersystem (5, 7) Verarbeitungsstrecken (17) umfasst, die den jeweiligen Gasturbinen (2) zugeordnet sind, und dazu konfiguriert ist, die jeweilige Gasturbine (2) wahlweise in einem automatischen Steuermodus zu betreiben, bei dem aktuelle individuelle Lastsollwerte (SPGT1, ..., SPGTm) der Gasturbinen (2) von jeweiligen Verarbeitungsstrecken (17) bestimmt werden, oder in einem manuellen Steuermodus, bei dem Bediener die aktuellen individuellen Lastsollwerte (SPGT1, ..., SPGTm) manuell auswählen können;
wobei die Verarbeitungsstrecken (17) dazu konfiguriert sind, die aktuellen individuellen Lastsollwerte (SPGT1, ..., SPGTm) der jeweiligen Gasturbinen (2) im automatischen Steuermodus auf der Grundlage des Anlagenlastziels (PLT) und der aktuellen Betriebsbedingungen der anderen Gasturbinen (2) im automatischen Steuermodus zu bestimmen;
wobei das Steuersystem (5, 7) dazu konfiguriert ist, eine Gesamtgasturbinenlaständerung (DGT) auf der Grundlage des Anlagenlastziels (PLT) und einer aktuellen Dampfturbinenlast (PST) der wenigstens einen Dampfturbine (3) zu bestimmen, und wobei das Steuersystem (5, 7) ferner dazu konfiguriert ist, jeweilige Gewichtungen (Wk) für die Gasturbinen (2) im automatischen Steuermodus zu bestimmen, wobei die Gewichtungen (Wk) Anteile der Gesamtgasturbinenlaständerung (DGT) definieren, die den jeweiligen Gasturbinen (2) zugeordnet sind;

**dadurch gekennzeichnet, dass** das Steuersystem (5, 7) ferner dazu konfiguriert ist, die Gewichtungen (Wk) zu bestimmen durch:

Bestimmen von Manuell-Modus-Gradienten (GIMk, GDMk) der Gasturbinen (2) im manuellen Betriebsmodus;

Bestimmen von maximalen Gesamtanlagengradienten (MAXGI, MAXGD) auf der Grundlage von individuellen maximalen Automatik-Modus-Gradienten (MAXGIk, MAXGDk) der Gasturbinen (2) im automatischen Betriebsmodus und von manuellen Lastgradienten (GMk), die im manuellen Modus manuell eingestellt wurden;

Bestimmen von Gesamtanlagengradienten (GPI, GPD) auf der Grundlage der maximalen Gesamtanlagengradienten (MAXGI, MAXGD) und eines aktuell programmierten Gradienten (CGP) für die Gasturbinen (2) als Ganzes, wobei der aktuell programmierte Gradient (CGP) im Steuersystem (5, 7) programmiert oder von dem Steuersystem (5, 7) von außen empfangen oder von einem Bediener manuell eingestellt wird;

Bestimmen von maximalen Automatik-Modus-Gesamtgradienten (MAXGIA, MAXGDA) der Gasturbinen (2) im automatischen Steuermodus;

Bestimmen von Automatik-Modus-Gesamtgradienten (GIA, GDA) der Gasturbinen (2) im automatischen Steuermodus auf der Grundlage der Gesamtanlagengradienten (GPI, GPD), der Manuell-Modus-Gradienten (GIMk, GDMk) der Gasturbinen (2) im manuellen Betriebsmodus und eines aktuellen Dampfturbinengradienten (GCST) der wenigstens einen Dampfturbine (3);

Bestimmen individueller Automatik-Modus-Gradienten (GIAk, GDAk) der Gasturbinen (2) im automatischen Steuermodus auf der Grundlage eines Verhältnisses der individuellen maximalen Automatik-Modus-Gradienten (MAXGIk, MAXGDk) zu den maximalen Automatik-Modus-Gesamtgradienten (MAXGIA, MAXGDA) der Gasturbinen (2) im automatischen Steuermodus und zu den Automatik-Modus-Gesamtgradienten (GIA, GDA); und

Bestimmen der Gewichtungen (Wk) aus den individuellen Automatik-Modus-Gradienten (GIAk, GDAk) und den Automatik-Modus-Gesamtgradienten (GIA, GDA).

2. Kraftwerk nach Anspruch 1, wobei die Betriebsbedingungen der Gasturbinen (2) die jeweiligen aktuellen individuellen Lastsollwerte (SPGT1, ..., SPGTm) und die jeweiligen aktuellen individuellen Lastgradienten (GCk) umfassen.

3. Kraftwerk nach Anspruch 1 oder 2, wobei die individuellen Automatik-Modus-Gradienten (GIAk, GDAk) der Gasturbinen (2) im automatischen Steuermodus individuelle Zunahme-Automatik-Modus-Gradienten (GIAk) und individuelle Abnahme-Automatik-Modus-Gradienten (GDAk) umfassen.

4. Kraftwerk nach Anspruch 3, wobei die Steuereinrichtung (5, 7) dazu konfiguriert ist, die individuellen Zunahme-Automatik-Modus-Gradienten (GIAk) und die individuellen Abnahme-Automatik-Modus-Gradienten (GDAk) zu bestimmen als

$$\text{GIAk} = \max(0,\ \min(\text{MAXGIk},\ \frac{MAXGIk}{MAXGIA}\ \text{GIA})$$

$$\text{GDAk} = \max(0,\ \min(\text{MAXGDk},\ \frac{MAXGDk}{MAXGDA}\ \text{GDA})$$

wobei MAXGIk und MAXGDk die individuellen maximalen Zunahme- bzw. Abnahme-Lastgradienten sind, MAXGIA und MAXGDA die maximalen Zunahme- bzw. Abnahme-Gesamtgradienten sind, und GIA und GDA die Zunahme- bzw. Abnahme-Automatik-Modus-Gesamtgradienten sind.

5. Kraftwerk nach einem der vorhergehenden Ansprüche, wobei das Steuersystem (5, 7) dazu konfiguriert ist, ein Gesamtanlagenlastziel (PLT) und eine Gesamtgasturbinenlaständerung (DGT) zu bestimmen, die von den Gasturbinen (2) als Ganzes geliefert werden sollen, und die Verarbeitungsstrecken (17) dazu konfiguriert sind, die aktuellen individuellen Lastsollwerte (SPGT1, ..., SPGTm) automatisch zu bestimmen durch:

Anwendung der jeweiligen Gewichtungen (Wk) auf die Gesamtgasturbinenlaständerung (DGT);

Addieren der Gesamtgasturbinenlaständerung (DGT) mit den jeweiligen Gewichtungen (Wk) zu einem jeweiligen aktuellen individuellen Lastsollwert (SPGTk);

anschließendes Anwenden einer Gradientenbegrenzung.

6. Kraftwerk nach Anspruch 5, wobei die Verarbeitungsstrecken (17) jeweilige Automatik/Manuell-Selektoren (25) enthalten, die dazu konfiguriert sind, zwischen dem automatischen Steuermodus, in dem aktuelle individuelle Lastsollwerte (SPGT1, ..., SPGTm) von den Verarbeitungsstrecken (17) automatisch bestimmt werden, und einem manuellen Steuermodus umschalten, in dem aktuelle individuelle Lastsollwerte (SPGT1, ..., SPGTm) von einem Bediener manuell eingestellt werden.

7. Verfahren zum Steuern eines Kombikraftwerks, das mehrere Gasturbinen (2) und wenigstens eine Dampfturbine (2) umfasst, wobei das Verfahren umfasst:

Betreiben der Gasturbinen (2) und der wenigstens einen Dampfturbine (3) entsprechend einem programmierten oder empfangenen Anlagenlastziel (PLT);

Betreiben der Gasturbine (2) wahlweise in einem automatischen Steuermodus, bei dem aktuelle individuelle Lastsollwerte (SPGT1, ..., SPGTm) der Gasturbinen (2) von jeweiligen Verarbeitungsstrecken (17) bestimmt werden, oder in einem manuellen Steuermodus, bei dem Bediener die aktuellen individuellen Lastsollwerte (SPGT1, ..., SPGTm) manuell einstellen können;

Bestimmen der aktuellen individuellen Lastsollwerte (SPGT1, ..., SPGTm) der jeweiligen Gasturbinen (2) im automatischen Steuermodus auf der Grundlage des Anlagenlastziels (PLT) und der aktuellen Betriebsbedingungen der anderen Gasturbinen (2) im automatischen Steuermodus;

wobei:

eine Gesamtgasturbinenlaständerung (DGT) auf der Grundlage des Anlagenlastziels (PLT) und einer aktuellen Dampfturbinenlast (PST) der wenigstens einen Dampfturbine (3) bestimmt wird; und

jeweilige Gewichtungen (Wk) für die Gasturbinen (2) im automatischen Steuermodus bestimmt werden, wobei die Gewichtungen (Wk) Anteile der Gesamtgasturbinenlaständerung (DGT) definieren, die den jeweiligen Gasturbinen (2) zugeordnet sind;

**dadurch gekennzeichnet, dass** das Bestimmen der Gewichtungen (Wk) umfasst:

Bestimmen von Manuell-Modus-Gradienten (GIMk, GDMk) der Gasturbinen (2) im manuellen Betriebsmodus;

Bestimmen von maximalen Gesamtanlagengradienten (MAXGI, MAXGD) auf der Grundlage von individuellen maximalen Automatik-Modus-Gradienten (MAXGIk, MAXGDk) der Gasturbinen (2) im automatischen Betriebsmodus und von manuellen Lastgradienten (GMk), die im manuellen Modus manuell eingestellt wurden;

Bestimmen von Gesamtanlagengradienten (GPI, GPD) auf der Grundlage der maximalen Gesamtanlagengradienten (MAXGI, MAXGD) und eines aktuell programmierten Gradienten (CGP) für die Gasturbinen (2) als Ganzes, wobei der aktuell programmierte Gradient (CGP) im Steuersystem (5, 7) programmiert oder von dem Steuersystem (5, 7) von außen empfangen oder von einem Bediener manuell eingestellt wird;

Bestimmen von maximalen Automatik-Modus-Gesamtgradienten (MAXGIA, MAXGDA) der Gasturbinen (2) im automatischen Steuermodus;

Bestimmen von Automatik-Modus-Gesamtgradienten (GIA, GDA) der Gasturbinen (2) im automatischen Steuermodus auf der Grundlage der Gesamtanlagengradienten (GPI, GPD), der Manuell-Modus-Gradienten (GIMk, GDMk) der Gasturbinen (2) im manuellen Betriebsmodus und eines aktuellen Dampfturbinengradienten (GCST) der wenigstens einen Dampfturbine (3);

Bestimmen individueller Automatik-Modus-Gradienten (GIAk, GDAk) der Gasturbinen (2) im automatischen Steuermodus auf der Grundlage eines Verhältnisses der individuellen maximalen Automatik-Modus-Gradienten (MAXGIk, MAXGDk) zu den maximalen Automatik-Modus-Gesamtgradienten (MAXGIA, MAXGDA) der Gasturbinen (2) im automatischen Steuermodus und zu den Automatik-Modus-Gesamtgradienten (GIA, GDA); und

Bestimmen der Gewichtungen (Wk) aus den individuellen Automatik-Modus-Gradienten (GIAk, GDAk) und den Automatik-Modus-Gesamtgradienten (GIA, GDA).

8. Verfahren nach Anspruch 7, wobei die Betriebsbedingungen der Gasturbinen (2) die jeweiligen aktuellen individuellen Lastsollwerte (SPGT1, ..., SPGTm) und die jeweiligen aktuellen individuellen Lastgradienten (GCk) umfassen.

9. Verfahren nach Anspruch 7 oder 8, wobei die individuellen Automatik-Modus-Gradienten (GIAk, GDAk) der Gasturbinen (2) im automatischen Steuermodus individuelle Zunahme-Automatik-Modus-Gradienten (GIAk) und individuelle Abnahme-Automatik-Modus-Gradienten (GDAk) umfassen.

10. Verfahren nach Anspruch 9, wobei das Bestimmen individueller Automatik-Modus-Gradienten (GIAk, GDAk) das Bestimmen der individuellen Zunahme-Automatik-Modus-Gradienten (GIAk) und der individuellen Abnahme-Automatik-Modus-Gradienten (GDAk) umfasst als

$$GIAk = max(0, min(MAXGIk, \frac{MAXGIk}{MAXGIA} GIA)$$

$$GDAk = max(0, min(MAXGDk, \frac{MAXGDk}{MAXGDA} GDA)$$

wobei MAXGIk und MAXGDk die individuellen maximalen Zunahme- bzw. Abnahme-Lastgradienten sind, MAXGIA und MAXGDA die maximalen Zunahme- bzw. Abnahme-Gesamtgradienten sind, und GIA und GDA die Zunahme- bzw. Abnahme-Automatik-Modus-Gesamtgradienten sind.

11. Verfahren nach einem der Ansprüche 7 bis 10, umfassend das Bestimmen eines Gesamtanlagenlastziels (PLT) und einer Gesamtgasturbinenlaständerung (DGT), die von den Gasturbinen (2) als Ganzes geliefert werden sollen, wobei das automatische Bestimmen der aktuellen individuellen Lastsollwerte (SPGT1, ..., SPGTm) umfasst:

Anwenden der jeweiligen Gewichtungen (Wk) auf die gesamte Gasturbinenlaständerung (DGT);
Addieren der Gesamtgasturbinenlaständerung (DGT) mit den jeweiligen Gewichtungen (Wk) zu einem jeweiligen aktuellen individuellen Lastsollwert (SPGTk);
anschließendes Anwenden einer Gradientenbegrenzung.

**Revendications**

1. Centrale électrique à cycle combiné comprenant :

une pluralité de turbines à gaz (2) ;
au moins une turbine à vapeur (3) ;
un système de commande (5, 7), conçu pour faire fonctionner les turbines à gaz (2) et l'au moins une turbine à vapeur (3) conformément à un objectif de charge de la centrale (PLT) programmé ou reçu ;
dans laquelle le système de commande (5, 7) comprend des lignes de traitement (17) associées à des turbines à gaz (2) respectives et est conçu pour faire fonctionner la turbine à gaz (2) respective sélectivement dans un mode de commande automatique, les points de consigne de charge individuels actuels (SPGT1, ..., SPGTm) des turbines à gaz (2) étant ainsi déterminés par les lignes de traitement (17) respectives, ou dans un mode de commande manuelle, les opérateurs étant ainsi autorisés à sélectionner manuellement les points de consigne de charge individuels actuels (SPGT1, ..., SPGTm) ;
dans laquelle les lignes de traitement (17) sont conçues pour déterminer les points de consigne de charge individuels actuels (SPGT1, ..., SPGTm) des turbines à gaz (2) respectives dans le mode de commande automatique sur la base de l'objectif de charge de la centrale (PLT) et des conditions de fonctionnement actuelles des autres turbines à gaz (2) dans le mode de commande automatique ;
dans laquelle le système de commande (5, 7) est conçu pour déterminer une variation de charge globale de la turbine à gaz (DGT) sur la base de l'objectif de charge de la centrale (PLT) et d'une charge actuelle de la turbine à vapeur (PST) de l'au moins une turbine à vapeur (3) et dans laquelle le système de commande (5, 7) est en outre conçu pour déterminer des poids respectifs (Wk) pour les turbines à gaz (2) dans le mode de commande automatique, les poids (Wk) définissant des fractions de la variation de charge globale de la turbine à gaz (DGT) attribuées aux turbines à gaz (2) respectives ;
**caractérisée en ce que** le système de commande (5, 7) est en outre conçu pour déterminer les poids (Wk) par :

la détermination de gradients en mode manuel (GIMk, GDMk) des turbines à gaz (2) en mode de fonctionnement manuel ;

la détermination de gradients maximum globaux de la centrale (MAXGI, MAXGD) sur la base des gradients maximum individuels en mode automatique (MAXGIk, MAXGDk) des turbines à gaz (2) en mode de fonctionnement automatique et des gradients de charge manuels (GMk) réglés manuellement en mode manuel ;

la détermination des gradients globaux de la centrale (GPI, GPD) sur la base des gradients maximum globaux de la centrale (MAXGI, MAXGD) et d'un gradient actuellement programmé (CGP) pour les turbines à gaz (2) dans leur ensemble, le gradient actuellement programmé (CGP) étant programmé dans le système de commande (5, 7) ou reçu par le système de commande (5, 7) depuis l'extérieur ou réglé manuellement par un opérateur ;

la détermination des gradients maximum globaux en mode automatique (MAXGIA, MAXGDA) des turbines à gaz (2) en mode de commande automatique ;

la détermination des gradients globaux en mode automatique (GIA, GDA) des turbines à gaz (2) en mode de commande automatique sur la base des gradients globaux de la centrale (GPI, GPD), des gradients en mode manuel (GIMk, GDMk) des turbines à gaz (2) en mode de fonctionnement manuel et d'un gradient actuel de la turbine à vapeur (GCST) de l'au moins une turbine à vapeur (3) ;

la détermination des gradients individuels en mode automatique (GIAk, GDAk) des turbines à gaz (2) en mode de commande automatique sur la base d'un rapport entre les gradients maximum individuels en mode automatique (MAXGIk, MAXGDk) et les gradients maximums globaux en mode automatique (MAXGIA, MAXGDA) des turbines à gaz (2) en mode de commande automatique et des gradients globaux en mode automatique (GIA, GDA) ; et

la détermination des poids (Wk) à partir des gradients individuels en mode automatique (GIAk, GDAk) et des gradients globaux en mode automatique (GIA, GDA).

2. Centrale électrique selon la revendication 1, dans laquelle les conditions de fonctionnement des turbines à gaz (2) comprennent les points de consigne de charge individuels actuels respectifs (SPGT1, ..., SPGTm) et les gradients de charge individuels actuels respectifs (GCk).

3. Centrale électrique selon la revendication 1 ou 2, dans laquelle les gradients individuels en mode automatique (GIAk, GDAk) des turbines à gaz (2) en mode de commande automatique comprennent un gradient individuel d'augmentation en mode automatique (GIAk) et un gradient individuel de diminution en mode automatique (GDAk).

4. Centrale électrique selon la revendication 3, dans laquelle le système de commande (5, 7) est conçu pour déterminer les gradients individuels d'augmentation en mode automatique (GIAk) et les gradients individuels de diminution en mode automatique (GDAk) comme suit

$$GIAk = max(0, \; min(MAXGIk, \; \frac{MAXGIk}{MAXGIA} \; GIA)$$

$$GDAk = max(0, \; min(MAXGDk, \; \frac{MAXGDk}{MAXGDA} \; GDA)$$

où MAXGIk et MAXGDk sont les gradients de charge maximum individuels respectivement d'augmentation et de diminution, MAXGIA et MAXGDA sont les gradients maximums globaux respectivement d'augmentation et de diminution, et GIA et GDA sont les gradients globaux en mode automatique respectivement d'augmentation et de diminution.

5. Centrale électrique selon l'une quelconque des revendications précédentes, dans laquelle le système de commande (5, 7) est conçu pour déterminer un objectif de charge globale de la centrale (PLT) et une variation de charge globale de la turbine à gaz (DGT) devant être fournis par l'ensemble des turbines à gaz (2) et les lignes de traitement (17) sont conçues pour déterminer automatiquement les points de consigne de charge individuels actuels (SPGT1, ..., SPGTm) par :

l'application des poids respectifs (Wk) à la variation de charge globale de la turbine à gaz (DGT) ;

l'ajout de la variation de charge globale de la turbine à gaz (DGT) avec les poids respectifs (Wk) à un point de consigne de charge individuel actuel respectif (SPGTk) ;

l'application ultérieure d'une limitation de gradient.

**6.** Centrale électrique selon la revendication 5, dans laquelle
les lignes de traitement (17) comprennent des sélecteurs automatiques/manuels respectifs (25) conçus pour commuter entre le mode de commande automatique, dans laquelle les points de consigne de charge individuels actuels (SPGT1, ..., SPGTm) sont déterminés automatiquement par les lignes de traitement (17), et un mode de commande manuel, dans lequel les points de consigne de charge individuels actuels (SPGT1, ..., SPGTm) sont réglés manuellement par un opérateur.

**7.** Procédé de commande d'une centrale électrique à cycle combiné comprenant une pluralité de turbines à gaz (2) et au moins une turbine à vapeur (2), le procédé comprenant :

le fonctionnement des turbines à gaz (2) et de l'au moins une turbine à vapeur (3) conformément à un objectif de charge de la centrale (PLT) programmé ou reçu ;
le fonctionnement de la turbine à gaz (2) sélectivement dans un mode de commande automatique, les points de consigne de charge individuels actuels (SPGT1, ..., SPGTm) des turbines à gaz (2) étant ainsi déterminés par les lignes de traitement (17) respectives, ou dans un mode de commande manuelle, les opérateurs étant ainsi autorisés à régler manuellement les points de consigne de charge individuels actuels (SPGT1, ..., SPGTm) ;
la détermination des points de consigne de charge individuels actuels (SPGT1, ..., SPGTm) des turbines à gaz respectives (2) dans le mode de commande automatique sur la base de l'objectif de charge de la centrale (PLT) et des conditions de fonctionnement actuelles des autres turbines à gaz (2) dans le mode de commande automatique ;
dans lequel :

la détermination d'une variation de charge globale de la turbine à gaz (DGT) sur la base de l'objectif de charge de la centrale (PLT) et d'une charge actuelle de la turbine à vapeur (PST) de l'au moins une turbine à vapeur (3) ; et
la détermination des poids respectifs (Wk) pour les turbines à gaz (2) dans le mode de commande automatique, les poids (Wk) définissant des fractions de la variation de charge globale de la turbine à gaz (DGT) attribuées aux turbines à gaz respectives (2) ;
**caractérisé en ce que** la détermination des poids (Wk) comprend :

la détermination de gradients en mode manuel (GIMk, GDMk) des turbines à gaz (2) en mode de fonctionnement manuel ;
la détermination de gradients maximum globaux de la centrale (MAXGI, MAXGD) sur la base des gradients maximum individuels en mode automatique (MAXGIk, MAXGDk) des turbines à gaz (2) en mode de fonctionnement automatique et des gradients de charge manuels (GMk) réglés manuellement en mode manuel ;
la détermination des gradients globaux de la centrale (GPI, GPD) sur la base des gradients maximum globaux de la centrale (MAXGI, MAXGD) et d'un gradient actuellement programmé (CGP) pour les turbines à gaz (2) dans leur ensemble, le gradient actuellement programmé (CGP) étant programmé dans le système de commande (5, 7) ou reçu par le système de commande (5, 7) depuis l'extérieur ou réglé manuellement par un opérateur ;
la détermination des gradients maximum globaux en mode automatique (MAXGIA, MAXGDA) des turbines à gaz (2) en mode de commande automatique ;
la détermination des gradients globaux en mode automatique (GIA, GDA) des turbines à gaz (2) en mode de commande automatique sur la base des gradients globaux de la centrale (GPI, GPD), des gradients en mode manuel (GIMk, GDMk) des turbines à gaz (2) en mode de fonctionnement manuel et d'un gradient actuel de la turbine à vapeur (GCST) de l'au moins une turbine à vapeur (3) ;
la détermination des gradients individuels en mode automatique (GIAk, GDAk) des turbines à gaz (2) en mode de commande automatique sur la base d'un rapport entre les gradients maximums individuels en mode automatique (MAXGIk, MAXGDk) et les gradients maximums globaux en mode automatique (MAXGIA, MAXGDA) des turbines à gaz (2) en mode de commande automatique et des gradients globaux en mode automatique (GIA, GDA) ; et
la détermination des poids (Wk) à partir des gradients individuels en mode automatique (GIAk, GDAk) et des gradients globaux en mode automatique (GIA, GDA).

**8.** Procédé selon la revendication 7, dans lequel les conditions de fonctionnement des turbines à gaz (2) comprennent les points de consigne de charge individuels actuels respectifs (SPGT1, ..., SPGTm) et les gradients de charge individuels actuels respectifs (GCk).

**9.** Procédé selon la revendication 7 ou 8, dans lequel les gradients individuels en mode automatique (GIAk, GDAk) des turbines à gaz (2) en mode de commande automatique comprennent un gradient individuel d'augmentation en mode automatique (GIAk) et un gradient individuel de diminution en mode automatique (GDAk).

**10.** Procédé selon la revendication 9, dans lequel la détermination des gradients individuels en mode automatique (GIAk, GDAk) comprend la détermination des gradients individuels d'augmentation en mode automatique (GIAk) et des gradients individuels de diminution en mode automatique (GDAk) comme suit

$$GIAk = max(0, \ min(MAXGIk, \ \frac{MAXGIk}{MAXGIA} \ GIA)$$

$$GDAk = max(0, \ min(MAXGDk, \ \frac{MAXGDk}{MAXGDA} \ GDA)$$

où MAXGIk et MAXGDk sont les gradients de charge maximum individuels respectivement d'augmentation et de diminution, MAXGIA et MAXGDA sont les gradients maximums globaux respectivement d'augmentation et de diminution, et GIA et GDA sont les gradients globaux en mode automatique respectivement d'augmentation et de diminution.

**11.** Procédé selon l'une quelconque des revendications 7 à 10, comprenant la détermination d'un objectif de charge globale de la centrale (PLT) et d'une variation de charge globale de la turbine à gaz (DGT) devant être fournis par les turbines à gaz (2) dans leur ensemble, dans lequel la détermination automatique des points de consigne de charge individuels actuels (SPGT1, ..., SPGTm) comprend :

l'application des poids respectifs (Wk) à la variation de charge globale de la turbine à gaz (DGT) ;
l'ajout de la variation de charge globale de la turbine à gaz (DGT) avec les poids respectifs (Wk) à un point de consigne de charge individuel actuel respectif (SPGTk) ;
l'application ultérieure d'une limitation de gradient.

FIG. 1

FIG. 2

FIG. 3

100 ⟶ DETERMINE CURRENT GRADIENTS GIMk, GDMk FOR GAS TURBINES 2 IN MANUAL MODE

SET CURRENT INDIVIDUAL LOAD GRADIENTS GCk ⟵ 110

120 ⟶ DETERMINE OVERALL MAXIMUM GRADIENTS MAXGI, MAXGD

DETERMINE OVERALL PLANT GRADIENTS GPI, GPD ⟵ 130

140 ⟶ CALCULATE OVERALL MAXIMUM GRADIENTS MAXGIA, MAXGDA

DETERMINE THE SUM OF THE OVERALL GRADIENTS GIA, GDA OF THE GAS TURBINES 2 IN AUTOMATIC MODE ⟵ 150

160 ⟶ DETERMINE REQUESTED LOAD GRADIENTS GIAk, GDAk FOR GAS TURBINES 2 IN AUTOMATIC MODE

DETERMINE WEIGHTS Wk ⟵ 170

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2765288 A1
- US 2013054038 A1
- EP 2456037 A2
- WO 2013065031 A2
- US 4222229 A